# EUROPÄISCHE PATENTSCHRIFT

(11) **EP 4 505 660 B1**
(45) Veröffentlichungstag und Bekanntmachung des Hinweises auf die Patenterteilung: **18.06.2025**
(21) Anmeldenummer: 23822252.5
(22) Anmeldetag: 05.12.2023
(51) Int. Cl.: H04L 9/00

(54) **VERFAHREN UND VORRICHTUNG ZUR INDIVIDUELLEN ZUWEISUNG MINDESTENS EINES FAHRZEUGFUNKTIONSSCHEMAS ZU MINDESTENS EINEM FAHRZEUG**
METHOD AND DEVICE FOR INDIVIDUALLY ASSIGNING AT LEAST ONE VEHICLE FUNCTION DIAGRAM TO AT LEAST ONE VEHICLE
PROCÉDÉ ET DISPOSITIF D'ATTRIBUTION INDIVIDUELLE D'AU MOINS UN DIAGRAMME DE FONCTION DE VÉHICULE À AU MOINS UN VÉHICULE

(30) Priorität: 20.12.2022 DE 102022004820
(43) Veröffentlichungstag der Anmeldung: 12.02.2025
(73) Patentinhaber: Mercedes-Benz Group AG, 70372 Stuttgart (DE)
(72) Erfinder: GERBAN, Mark, 22307 Hamburg (DE); ENGEL, Michael, 70374 Stuttgart (DE)
(74) Vertreter: Novagraaf Group
(86) Internationale Anmeldenummer: PCT/EP2023/084313
(87) Internationale Veröffentlichungsnummer: WO 2024/132503

(56) Entgegenhaltungen:
- US-A1- 2022 075 845
- US-A1- 2022 366 061
- 1 January 2021, SPRINGER INTERNATIONAL PUBLISHING, Cham, ISBN: 978-3-030-90700-6, ISSN: 2195-4356, article DIETRICH FABIAN ET AL: "Concept for a Token-Based Blockchain Architecture for Mapping Manufacturing Processes of Products with Changeable Configurations", pages: 508 - 515, XP093132718, DOI: 10.1007/978-3-030-90700-6_57

## Beschreibung

Die Erfindung betrifft ein Verfahren zur individuellen Zuweisung mindestens eines Fahrzeugfunktionsschemas zu mindestens einem Fahrzeug gemäß dem Oberbegriff des Anspruchs 1. Ferner betrifft die Erfindung eine Vorrichtung zur Durchführung eines solchen Verfahrens gemäß dem Oberbegriff des Anspruchs 10.

Das Dokument US 2012/0317161 A1 beschreibt ein fahrzeuginternes Computersystem mit Anweisungen, die einen Prozessor veranlassen, ein Medienprofil eines ersten Nutzers zu speichern, welches dessen Medienpräferenzen angibt. Der Prozessor ermittelt ferner, wenn das Fahrzeug einem zweiten Fahrzeug begegnet, und empfängt ein Medienprofil eines zweiten Nutzers. Ferner bewertet der Prozessor die Profile um eine Ähnlichkeit zwischen ihnen zu ermitteln. Wenn eine Ähnlichkeit ermittelt wurde, werden basierend auf den Merkmalen der Profile empfohlene Medien identifiziert und es wird die Bereitstellung von empfohlenen Medien zu einem der Nutzer des ersten Fahrzeugs und dem Nutzer des zweiten Fahrzeugs ausgelöst.

Das Dokument US 2013/0124009 A1 beschreibt eine Vorrichtung und ein Verfahren zur Verwaltung von Fahrzeugkonfigurationen. Es wird eine Datenbank mit mehreren Konfigurationsvorlagen bereitgestellt. Eine Konfigurationsvorlage umfasst Parameter konfigurierbarer Merkmale und Einstellungen eines zugeordneten Fahrzeugs. Einem Nutzer wird mittels einer Konfigurationsanwendung ermöglicht, eine Konfigurationsvorlage abzurufen und anzupassen. Angepasste Konfigurationsdaten werden an ein Steuermodul des Fahrzeugs übertragen, um Merkmale und Einstellungen in Übereinstimmung mit den Konfigurationsdaten des Nutzers anzupassen.

Das Dokument US 2017/0369052 A1 beschreibt eine Vorrichtung und ein Verfahren zur Steuerung eines autonomen Fahrzeugs. Das Verfahren umfasst den Empfang einer Profilauswahl durch einen elektronischen Prozessor des autonomen Fahrzeugs. Das Verfahren umfasst ferner das Empfangen eines Fahrerprofils mit einer Vielzahl von Einstellungen basierend auf der Profilauswahl. Das Verfahren umfasst ferner in einem autonomen Fahrmodus das Steuern mit dem elektronischen Prozessor basierend auf mindestens einer der mehreren Einstellungen.

Das Dokument US 2022/0366061 A1 beschreibt ein Verfahren zur Prüfung der Authentizität einer Assoziierung eines non-fungible Token (NFT) mit einem physischen Objekt. In einer Ausführungsform ist das Verfahren geeignet, die Verbindung zwischen einem NFT und einem authentifizierten physischen Objekt zu verifizieren. In einer weiteren Ausführungsform umfasst das Verfahren das Abrufen von Authentifizierungs-Metadaten für ein Sicherheitsmerkmal, das einem physischen Objekt zugeordnet wird. Es kann überprüft werden, ob die Authentifizierungs-Metadaten für das Sicherheitsmerkmal einen Identifikator des NFT enthalten.

Das Dokument US 2022/0075845 A1 beschreibt ein System für den computergestützten Entwurf (CAD) unter Verwendung einer Bildanalysevorrichtung zur Identifizierung von Objekten in Videobildern. Von der Bildanalysevorrichtung ermittelte Anpassungsregeln und Objekt-Identifikatoren ermitteln, ob ein Videobild für die Verwendung bei der Anpassung eines Produkts zugelassen ist. Es wird ermittelt, welche Videobilder zur Anpassung genutzt werden sollen. Ein erstes Videobild, das noch nicht zur Anpassung des Produkts ausgewählt wurde, wird ausgewählt und auf das Produkt gedruckt. Das erste Videobild wird von der weiteren Verwendung für die Anpassung des Produkts ausgeschlossen.

Das Dokument Dietrlich, Fabian et al. "Concept for a Token-based Blockchain Architecture for Mapping Manufacturing Processes of Products with Changeable Configurations", A.-L. Andersen et al. (Eds.): CARV 2021/MCPC 2021, LNME, pp. 508-515, 2022, https://doi.org/10.1007/978-3-030-90700-6_57, beschreibt ein Verfahren, bei dem logisch entkoppelte Tokens in eine flexible Smart Contract Struktur eingebettet werden. Es wird ein Konzept für eine Token-basierte Architektur beschrieben, mit der Herstellungsprozesse von Produkten mit veränderlichen Konfigurationen abgebildet werden können.

Das Dokument US 2013/0124009 A1 beschreibt eine Vorrichtung und ein Verfahren zur Verwaltung von Fahrzeugkonfigurationen. Eine Datenbank umfassend eine Mehrzahl von Konfigurationsvorlagen wird bereitgestellt. Die Konfigurationsvorlagen umfassen Parameter von konfigurierbaren Merkmalen und Einstellungen eines zugeordneten Fahrzeugs. Einem Anwender wird eine Softwareanwendung bereitgestellt, mit der Konfigurationsvorlagen abgerufen und personalisiert werden können. Die personalisierten Konfigurationsdaten werden an eine Steuereinheit des Fahrzeugs übertragen, um Merkmale und Einstellungen entsprechend der Konfigurationsdaten des Nutzers anzupassen.

Der Erfindung liegt die Aufgabe zu Grunde, ein verbessertes Verfahren zur individuellen Zuweisung mindestens eines Fahrzeugfunktionsschemas zu mindestens einem Fahrzeug anzugeben. Diese Aufgabe wird erfindungsgemäß durch ein Verfahren mit den Merkmalen des Anspruchs 1 gelöst.

Ferner liegt der Erfindung die Aufgabe zu Grunde, eine Vorrichtung zur Durchführung dieses Verfahrens anzugeben. Diese Aufgabe wird mit einer Vorrichtung mit den Merkmalen des Anspruchs 10 gelöst.

Vorteilhafte Ausgestaltungen der Erfindung sind Gegenstand der Unteransprüche.

Das Nutzererlebnis, das heißt: die Wahrnehmung multimedialer Inhalte, aber auch die Wahrnehmung des Fahrzeugbetriebs durch einen Fahrzeuginsassen, wird in modernen Fahrzeugen durch eine Vielzahl von frei wählbaren Parametern beeinflusst. Die optimale Gestaltung eines solchen Nutzererlebnisses ist aufwändig und bietet gegenüber standardisierten Einstellungen einen Mehrwert. Daher besteht ein Bedarf an einem Verfahren, mit dem die Weitergabe derart angepasster Einstellungen kontrolliert werden kann und insbesondere eine beliebige Vervielfältigung unterbunden werden kann, indem angepasste Einstellungen einem individuellen (das heißt: identifizierbaren) Fahrzeug zugeordnet werden.

Bei einem Verfahren zur individuellen Zuweisung mindestens eines Fahrzeugfunktionsschemas zu mindestens einem Fahrzeug wird gemäß einem ersten Aspekt der Erfindung ein Fahrzeugfunktionsschema digital erfasst, beispielsweise als Menge von Ganzzahlwerten, Gleitkommawerten, Zeichen, Zeichenketten, Binärdaten und/oder Steueranweisungen. Ein derart digital erfasstes, beispielsweise in einer Markierungssprache wie XML (extensible markup language) oder JavaScript Objekt Notation (JSON) kodiertes Fahrzeugfunktionsschema wird erfindungsgemäß als nicht-fungibles Token (non-fungible token, NFT) in einer vorbestimmten Anzahl in einem Distributed Ledger Technology (DLT) - System geprägt.

Unter "prägen" (minting) ist hierbei die Individualisierung und Registrierung digitaler Datensätze zu verstehen. Mit anderen Worten: das DLT - System verwaltet individualisierte (beispielsweise über zugeordnete, innerhalb des DLT - Systems einzigartige Zahlen oder Zeichenketten) Fahrzeugfunktionsschemata und kann diese in nachvollziehbarer und fälschungssicherer Weise anderen Entitäten, beispielsweise Nutzern, Organisationen, Fahrzeugen oder anderen Systemen zuordnen. DLT - Systeme sind aus dem Stand der Technik bekannt, beispielsweise auf Basis des Blockchain - Verfahrens arbeitende DLT - Systeme.

Erfindungsgemäß wird zum Prägen und Verwalten von NFTs korrespondierend zu Fahrzeugfunktionsschemata ein DLT - System verwendet, das zur Zuordnung von, bezogen auf einen bestimmten Zeitpunkt, höchstens einem Fahrzeug zu einem NFT eingerichtet ist. Selbstverständlich können aber einem Fahrzeugfunktionsschema auch mehrere NFTs zugeordnet sein, die somit prinzipiell funktionsgleich (das heißt: ein Fahrzeug in gleicher Weise konfigurierend) sind und verschiedenen Fahrzeugen zuordenbar sind. Somit kann, abhängig von der Anzahl der für ein Fahrzeugfunktionsschema geprägten NFTs, nur ein einziges Fahrzeug oder auch eine beliebige andere begrenzte Anzahl von Fahrzeugen diesem bestimmten Fahrzeugfunktionsschema zugeordnet werden.

Aus der Menge der in dem DLT - System registrierten NFTs wird für ein Fahrzeug mindestens ein NFT ausgewählt und/oder erworben. Das diesem ausgewählten und/oder erworbenen NFT zugeordnete Fahrzeugfunktionsschema wird auf das Fahrzeug angewendet.

Das erfindungsgemäße Verfahren ermöglicht es, die Verbreitung von Fahrzeugfunktionsschemata zu kontrollieren und einen digitalen Marktplatz für den Handel damit zu schaffen. Insbesondere wird eine unberechtigte Weitergabe von Fahrzeugfunktionsschemata durch die fälschungssichere Zuordnung zu jeweils höchsten einem Fahrzeug in dem DLT - System unterbunden. Dadurch wird die Entwicklung und Weiterentwicklung derartiger Fahrzeugfunktionsschemata befördert, eine exklusive Wahrnehmung gewisser Fahrzeugfunktionen erreicht und ein zusätzlicher Mehrwert aus dem Handel mit Fahrzeugfunktionsschemata erzielt.

Unter einem Fahrzeugfunktionsschema soll hier und im Folgenden eine Konfiguration, das heißt: ein Satz von Parametern und/oder funktionalen Einstellungen einer Fahrzeugfunktion verstanden werden.

In einer Ausführungsform erfasst ein Fahrzeugfunktionsschema Parameter einer visuell wahrnehmbaren Inszenierung eines Fahrzeuginnenraums. Solche Parameter können beispielsweise eine Fahrzeuginnenraumbeleuchtung betreffen und derart einstellen, dass eine spezifische, ein besonderes Nutzererlebnis auslösende Farbigkeit, Helligkeit und/oder Helligkeitsverteilung erzeugt wird oder werden. Alternativ oder zusätzlich können solche Parameter auch Hintergrundbilder oder Hintergrundmuster konfigurieren, auf einem oder mehreren Displays im Fahrzeuginnenraum dargestellt werden. Visuell wahrnehmbare Inszenierungen sind besonders gut personalisierbar und bieten eine hohe Wiedererkennbarkeit.

In analoger Weise kann ein Fahrzeugfunktionsschema die Audiowiedergabe im Fahrzeuginnenraum parametrisieren, beispielsweise hinsichtlich der absoluten und/oder der frequenzabhängig relativen Lautstärke oder hinsichtlich bestimmter Soundeffekte. Beispielsweise bevorzugte Einstellungen einer Audiowiedergabe in Abhängigkeit von einer Audioquelle (beispielsweise Radio oder externe Medien) oder in Abhängigkeit von einer Audiocharakteristik (beispielsweise Sprache, klassische Musik oder Rockmusik) in einem Fahrzeugfunktionsschema parametrisiert sein. Ebenso können Soundeffekte parametrisiert sein, die zur Wahrnehmung in der unmittelbaren Fahrzeugumgebung erzeugt werden, beispielsweise ein künstliche Motorsound für eine elektrisch betriebenes Fahrzeug.

Erfindungsgemäß umfasst ein NFT Anforderungsdaten und Parameterdaten, wobei die Parameterdaten die Einstellungen des Fahrzeugfunktionsschemas beschreiben und wobei die Anforderungsdaten diejenigen Ausstattungsmerkmale des Fahrzeugs beschreiben, die für eine Umsetzung eines Fahrzeugfunktionsschemas entsprechend den Parameterdaten erforderlich sind.

Typischerweise weist ein NFT einen transaktionsvariablen kryptographischen Hashwert auf, in den sowohl Merkmale des geschützten digitalen Gutes (vorliegend Parameter eines Fahrzeugfunktionsschemas) als auch Merkmale einer oder mehrerer Transaktionen mit diesem digitalen Gut eingehen, beispielsweise Zeitstempel einer Übertragung von Eigentums- oder Nutzungsrechten. Derartige, über das gesamte digitale Gut ermittelte Hashwerte sind daher, selbst wenn sie ein und dieselbe Einstellung eines Fahrzeugfunktionsschemas betreffen, für eine Suche ungeeignet, da sie im Laufe der Transaktionen in nicht vorhersagbarer Weise verändert werden.

In der vorliegenden Ausführungsform wird ein derartiger transaktionsvariabler Hashwert eines NFT nur auf Grundlage der Parameterdaten gebildet und um einen transaktionsinvarianten Teil ergänzt, der die Anforderungsdaten umfasst. In vorteilhafter Weise können anhand des transaktionsinvarianten Teils diejenigen NFTs gesucht werden, die auf einem Fahrzeug mit gegebenen spezifischen Ausstattungsmerkmalen umsetzbar sind. Zugleich wird die kryptographische Sicherheit der zu schützenden Einstellungen des Fahrzeugfunktionsschemas dadurch nicht kompromittiert.

In einer besonders vorteilhaften Ausführungsform umfassen die Anforderungsdaten einen Sonderausstattungs-Code (SA Code) und/oder eine Hardware-Version und/oder eine Software-Version eines Ausstattungsmerkmals. Dadurch ist eine besonders einfache und spezifische Suche nach NFTs möglich, die für ein bestimmtes Fahrzeug geeignet sind.

Bei einer Ausführungsform des Verfahrens wird für mindestens einen in dem DLT - System registrierten NFT dessen Kompatibilität zu einem gewissen Fahrzeug anhand der Identität dieses Fahrzeugs ermittelt. Die Identität eines Fahrzeugs kann beispielsweise durch eine als Vehicle Identification Number (VIN) bezeichnete, mindestens für die Flotte von Fahrzeugen eines Fahrzeugherstellers eindeutige Zahl oder Zeichenkette bestimmt sein.

Mittels dieser Ausführungsform werden für ein Fahrzeug nur diejenigen Fahrzeugfunktionsschemata angeboten und/oder bereitgestellt, die mit den Ausstattungsmerkmalen des Fahrzeugs kompatibel sind, das heißt: mit den Hardware- und Software-Komponenten des Fahrzeugs genutzt und umgesetzt werden können. Dadurch wird eine leichtere Bedienbarkeit bei der Konfiguration des Fahrzeugs ermöglicht.

Bei einer Ausführungsform wird eine Auswahlliste erzeugt und in mindestens einer Head Unit eines Fahrzeugs gespeichert, welche die in dem DLT - System registrierten, zu diesem Fahrzeug kompatiblen NFTs umfasst. Unter einer Head Unit ist hier und im Folgenden ein zentrales Steuergerät zu verstehen, das eine Benutzerschnittstelle aufweist und mit dem Fahrzeugfunktionen, insbesondere Einstellungen im Fahrzeuginnenraum und/oder Infotainment - Funktionen angesteuert werden können.

Mit dieser Ausführungsform kann eine Auswahl von NFTs besonders schnell und autark, das heißt: ohne wiederholten Zugriff auf das DLT - System ausgeführt werden.

Bei einer weiteren Ausführungsform werden zu einem Fahrzeug Ausstattungsmerkmale in einem Konfigurations-Verwaltungssystem zugeordnet und dort gespeichert. Derartige Ausstattungsmerkmale können beispielsweise, aber nicht ausschließlich, die Kompatibilität zu Fahrzeugfunktionsschemata von NFTs betreffen. Beispielsweise kann eine in dem Fahrzeug verbaute Hardwarekonfiguration für ein System zur Fahrzeuginnenraumbeleuchtung sowie eine darauf installierte Softwareversion erfasst sein.

Gemäß dieser Ausführungsform des Verfahrens wird eine Liste aller in dem DLT - System registrierten NFTs erstellt und mindestens ein NFT von dieser Liste ausgewählt. Für das mindestens eine ausgewählte NFT wird dessen Kompatibilität zu dem Fahrzeug anhand des Konfigurations-Verwaltungssystems bestimmt.

Mit dieser Ausführungsform wird erreicht, dass für ein Fahrzeug nur diejenigen NFTs ausgewählt werden, deren zugeordnete Fahrzeugfunktionsschemata in dem Fahrzeug umsetzbar sind. Dadurch wird eine besonders gute Bedienbarkeit ermöglicht und verhindert, dass ungeeignete NFTs erworben werden.

Bei einer weiteren Ausführungsform wird für ein Fahrzeug eine Auswahlliste von solchen in dem DLT - System registrierten NFTs erzeugt, die zu dem jeweiligen Fahrzeug (das heißt: zu dessen Ausstattungsmerkmalen) kompatibel sind. Eine solche auch als Whitelist bezeichnete Auswahlliste wird zur Auswahl eines oder mehrerer kompatibler NFTs angeboten. Dadurch wird dem Nutzer die Auswahl von NFTs erleichtert.

Bevorzugt wird eine derart generierte Auswahlliste lokal in dem Fahrzeug in einer oder in mehreren Head Units gespeichert und für eine nachfolgende Auswahl von NFTs wiederverwendet. Indem eine solche Auswahlliste nicht bei jedem Auswahlvorgang, sondern nur in größeren Zeitabständen neu generiert werden muss, werden der Auswahlvorgang beschleunigt und die Bedienbarkeit verbessert.

Bei einer weiteren Ausführungsform wird zu jedem NFT ein erster Hashwert erzeugt, der auf den Anforderungsdaten basiert, die die für eine Umsetzung der diesem NFT zugeordneten Einstellungen des Fahrzeugfunktionsschemas erforderlichen Ausstattungsmerkmale, beispielsweise als Menge von SA-Codes, beschreiben. Ferner wird ein zweiter Hashwert erzeugt, der auf den Einstellungen des Fahrzeugfunktionsschemas basiert. Eine erste Liste umfassend die ersten Hashwerte wird erstellt und lokal in einem Fahrzeug gespeichert. Ferner wird eine zweite Liste umfassend die zweiten Hashwerte erstellt und in einem verteilten System unabhängig von einem Fahrzeug, vorzugsweise in einer Cloud, gespeichert.

Beim Abrufen eines NFT für ein bestimmtes Fahrzeug werden anhand der ersten, lokal in dem Fahrzeug gespeicherten Liste diejenigen NFTs ausgewählt, die auf dem Fahrzeug umgesetzt werden können, und deren erste Hashwerte extrahiert. Sodann werden anhand der zweiten, verteilt und bevorzugt in der Cloud gespeicherten Liste die jeweils zugeordneten zweiten Hashwerte gesucht und extrahiert, welche die zugeordneten Einstellungen des Fahrzeugfunktionsschemas beschreiben.

Der erste und der jeweils zugeordnete zweite Hashwert werden kombiniert und mittels eines Prüfalgorithmus auf korrekte Zuordnung geprüft. Bei korrekter Zuordnung wird das NFT anhand des aus dem ersten und zweiten Hashwert kombinierten Wertes von dem DLT System abgerufen.

Gemäß einem zweiten Aspekt der Erfindung umfasst eine Vorrichtung zur Durchführung des Verfahrens nach dem ersten Aspekt der Erfindung mindestens ein DLT - System, das für den Zugriff über ein Over-The-Air Netzwerk, bevorzugt über ein Mobilfunknetzwerk, eingerichtet ist.

Dadurch wird eine Ausführbarkeit des Verfahrens nahezu unabhängig vom Standort des Fahrzeugs ermöglicht. Weitere Vorteile der Vorrichtung entsprechen den Vorteilen des Verfahrens gemäß dem ersten Aspekt der Erfindung.

Ausführungsbeispiele der Erfindung werden im Folgenden anhand von Zeichnungen näher erläutert.

Dabei zeigen:
- Fig. 1: schematisch den Aufbau eines nicht-fungiblen Tokens (NFT),
- Fig. 2: schematisch einen Verfahrensablauf bei der Übertragung eines NFTs zwischen einem Distributed Ledger Technology (DLT) - System und einem Fahrzeug,
- Fig. 3: schematisch den Zugriff auf ein DLT - System von Fahrzeugen aus,
- Fig. 4: schematisch das Verfahren zur Beschränkung des Zugriffs auf Fahrzeugeinstellungen, die mittels NFT geschützt sind,
- Fig. 5: schematisch den Verfahrensablauf für die Auswahl eines NFTs für ein Fahrzeug,
- Fig. 6: schematisch den Verfahrensablauf für die Auswahl eines NFTs für ein Fahrzeug anhand von NFT-Hashwerten sowie
- Fig. 7: schematisch den Ablauf einer Transaktion zur Übertragung eines NFTs zwischen zwei Fahrzeugen.

Einander entsprechende Teile sind in allen Figuren mit den gleichen Bezugszeichen versehen.

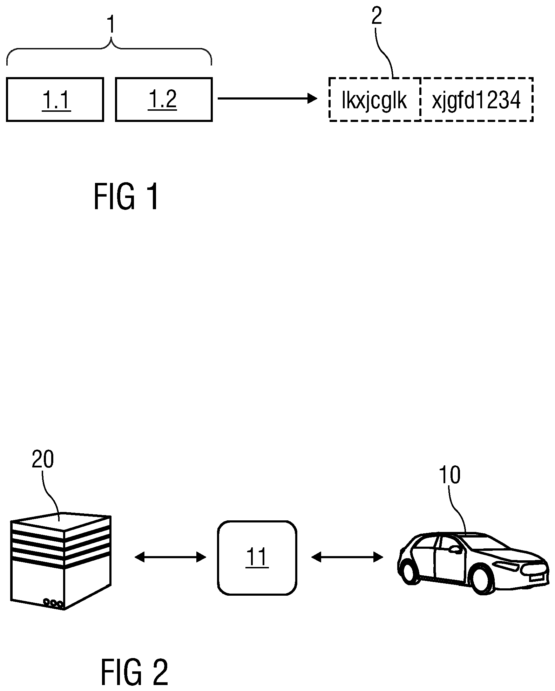

Figur 1 zeigt schematisch den Aufbau eines nicht-fungiblen Tokens (non-fungible token, NFT) 1 zur Konfiguration von Fahrzeugfunktionen, beispielsweise zur Konfiguration eines Farbschemas für eine Fahrzeuginnenraumbeleuchtung oder zur Konfiguration eines Sound- oder Audioschemas für eine Audioanlage. Das NFT 1 umfasst Daten, bevorzugt in einer Zeichenkette angeordnete Zeichen, Steueranweisungen und/oder Zahlen.

In einem ersten Abschnitt umfasst das NFT 1 Anforderungsdaten 1.1, anhand derer die technische Umsetzbarkeit einer durch das NFT 1 spezifizierten Konfiguration (das heißt: eines auf eine bestimmte Funktion bezogenen Fahrzeugfunktionsschemas) geprüft werden kann. Anforderungsdaten 1.1 können beispielsweise einen oder mehrere Sonderausstattungscodes (SA-Codes) umfassen. Mit einem SA-Code werden bestimmte optionale, beispielsweise länder- oder regionenspezifische Ausstattungsmerkmale eines in Figur 1 nicht näher dargestellten Fahrzeugs identifiziert. Alternativ oder zusätzlich können die Anforderungsdaten 1.1 Entwicklungsstände von Teilsystemen des Fahrzeugs identifizieren, beispielsweise eine Hardware - Version und/oder eine Software - Version.

In einem zweiten Abschnitt umfasst das NFT 1 Parameterdaten 1.2, die Einstellungen für bestimmte Funktionen festlegen, die in einem Fahrzeug verfügbar sind, dass den Anforderungsdaten 1.1 genügt. Mittels derartiger Parameterdaten 1.2 kann beispielsweise die Beleuchtung eines Fahrzeuginnenraums so konfiguriert werden, dass bestimmte Farben oder Abfolgen von Farben dargestellt werden. Zudem kann die Beleuchtung abhängig von Betriebszuständen des Fahrzeugs (beispielsweise einer Geschwindigkeit, einer Beschleunigung oder einer Abbremsung) oder von anderen, durch einen Nutzer des Fahrzeugs einstellbaren Fahrzeug- oder Multimediafunktion verändert werden. Beispielsweise kann abhängig von einer durch den Nutzer ausgewählten Musik eines Infotainment-Systems ein Beleuchtungsschema eingestellt werden.

In analoger Weise können Audio- oder Soundfunktionen des Fahrzeugs konfiguriert werden. Ferner können Fahrzeugsitze in ihrer Position verändert und dadurch an bestimmte Vorlieben eines Nutzers angepasst werden.

Ferner können mittels der Parameterdaten 1.2 bestimmte Grafiken oder Abbildungen angegeben werden, die auf einer oder mehreren im Fahrzeug verfügbaren Anzeigevorrichtungen angezeigt werden sollen. Auch eine Hintergrundbeleuchtung für solche Anzeigevorrichtungen kann mittels der Parameterdaten 1.2 bestimmt sein.

Darüber hinaus können Lichteffekte, beispielsweise eine Licht-Show beim Öffnen einer Fahrzeugtür oder die Beleuchtung eines Typen- oder Markenschildes, und/oder Soundeffekte, beispielsweise ein Motorengeräusch eines elektrisch angetriebenen Fahrzeugs, mittels der Parameterdaten 1.2 konfiguriert werden.

Einem NFT 1 wird über eine kryptographische Hashfunktion ein als Zeichenkette und/oder Ganzzahl darstellbarer NFT-Hashwert 2 zugeordnet. Kryptographisch (oder kryptologisch) ist insbesondere eine Hashfunktion, die kollisionsresistent und eine Einwegfunktion ist. Somit kann mit realistisch verfügbarer Rechenleistung kein weiterer NFT 1 ermittelt werden, der auf denselben NFT-Hashwert 2 führt wie ein davon verschiedener erster NFT 1. Ebenso kann mit realistisch verfügbarer Rechenleistung kein NFT 1 bestimmt werden, der unter Anwendung dieser kryptographischen Hashfunktion einen vorgegebenen NFT-Hashwert 2 ergibt.

Nachfolgend kann der NFT-Hashwert 2 an Stelle des NFTs 1 übertragen und/oder gespeichert werden. Bevorzugt ist die kryptographische Hashfunktion so gewählt, dass dem NFT-Hashwert 2 gewisse, besonders bedeutsame Merkmale der Anforderungsdaten 1.1 und/oder der Parameterdaten 1.2 entnehmbar sind, beispielsweise Beschränkungen hinsichtlich der technischen Anwendbarkeit des NFTs 1 (beispielweise eine minimale Hardware- und/oder Softwareversion).

In einer Ausführungsform ist es möglich, die Zeichenkette des NFT-Hashwertes 2 in Teil-Zeichenketten zu zerlegen, um sie an verschiedenen Stellen, beispielsweise in einem Fahrzeug und auf einem in Figur 1 nicht näher dargestellten zentralen Softwaresystem, abzulegen.

Figur 2 verdeutlicht das Verfahren der Übertragung eines NFTs 1 zwischen einem Distributed Ledger Technology (DLT) - System 20 und einem Fahrzeug 10. Das Fahrzeug 10 weist mindestens ein als Head Unit 11 bezeichnetes Infotainment - Gerät auf, das für einen Datenaustausch, insbesondere über ein in Figur 2 nicht näher dargestelltes drahtlos verfügbares Over-The-Air (OTA) Netzwerk, mit dem DLT - System 20 eingerichtet ist und das über eine Benutzerschnittstelle von einem Fahrzeuginsassen bedient werden kann.

Die Head Unit 11 steuert Funktionen des Fahrzeugs 10, beispielsweise Beleuchtungsfunktionen einer Fahrzeuginnenraumbeleuchtung, die Audiowiedergabe eines Audiosystems im Fahrzeuginnenraum, einen Soundgenerator zur Erzeugung eines künstlichen Motorengeräusches für ein Fahrzeug mit Elektroantrieb oder Aktoren zur Verstellung von Fahrzeugsitzen in dem Fahrzeug 10 an, typischerweise unter Einbeziehung weiterer, in Figur 2 nicht näher dargestellter Steuergeräte.

Das DLT - System 20 kann beispielsweise als Blockchain ausgebildet sein und ist für die Verwaltung einer Mehrzahl von NFTs 1 eingerichtet. Insbesondere ist das DLT - System 20 dafür eingerichtet, darin verwaltete NFTs 1 manipulations- und fälschungssicher zu individualisieren, das heißt: einem bestimmten Benutzer zuzuordnen. Die Funktionsweise des DLT - Systems 20 wird nachfolgend noch genauer erläutert.

Mittels einer vorzugsweise grafischen Bedienungsschnittstelle der Head Unit 11 kann einem Nutzer (das heißt: einem Fahrer oder sonstigen Fahrzeuginsassen des Fahrzeugs 10) eine Liste von NFTs 1 angezeigt werden, deren zugeordnete Konfigurationen auf dem Fahrzeug 10 umsetzbar sind.

Hierzu kann von der Head Unit 11 eine Fahrzeugidentifikationsnummer (vehicle identification number, VIN) an das DLT - System 20 übermittelt werden. Anhand eines in Figur 2 nicht näher dargestellten weiteren Fahrzeugkonfigurations-Informationssystems können anhand einer solchen VIN solche NFTs 1 ausgewählt und an das Fahrzeug 10 gesendet werden, welche auf dem Fahrzeug 10 technisch (mit der verfügbaren Hard- und Softwarekonfiguration) ausführbar ist. Alternativ können auch für die Auswahl von NFTs 1 relevante Angaben und Parameter an das DLT - System 20 direkt übermittelt werden.

In einer Ausführungsform kann ein NFT-Hashwert 2 als ein Index verwendet werden, über den ein Satz von Parametern und/oder ein bestimmter, beispielsweise als Programm kodierter Algorithmus zur Auswertung dieser Parameter eindeutig ermittelt werden kann, beispielsweise von einem Cloud - Server heruntergeladen werden kann. Die Parameter und/oder der Algorithmus werden in den lokalen Speicher der Head Unit 11 geladen. Die Head Unit 11 ermittelt daraus eine Einstellung von Fahrzeugfunktionen, beispielsweise die Ansteuerung von Leuchtmitteln unterschiedlicher Farbe zur Ausleuchtung des Fahrzeuginnenraums zur Vermittlung eines vorbestimmten, wahrnehmbaren Farbeindrucks.

In einer Ausführungsform wird eine Liste für das jeweilige Fahrzeug 10 technisch geeigneter NFTs 1 auf der Bedienungsschnittstelle zur Auswahl angezeigt und/oder auf einem Datenspeicher abgelegt. Durch Auswahl aus dieser Liste kann ein Nutzer ein entsprechendes NFT 1 für sein Fahrzeug 10 aktivieren (das heißt: Fahrzeugfunktionen des Fahrzeugs 10 gemäß den im ausgewählten NFT 1 festgelegten Parametern einstellen). Typischerweise wird es dazu erforderlich sein, ein ausgewähltes NFT 1 vor der Nutzung zu erwerben, beispielsweise durch eine über ein Drahtlos-Netzwerk vermittelte E-Commerce Transaktion.

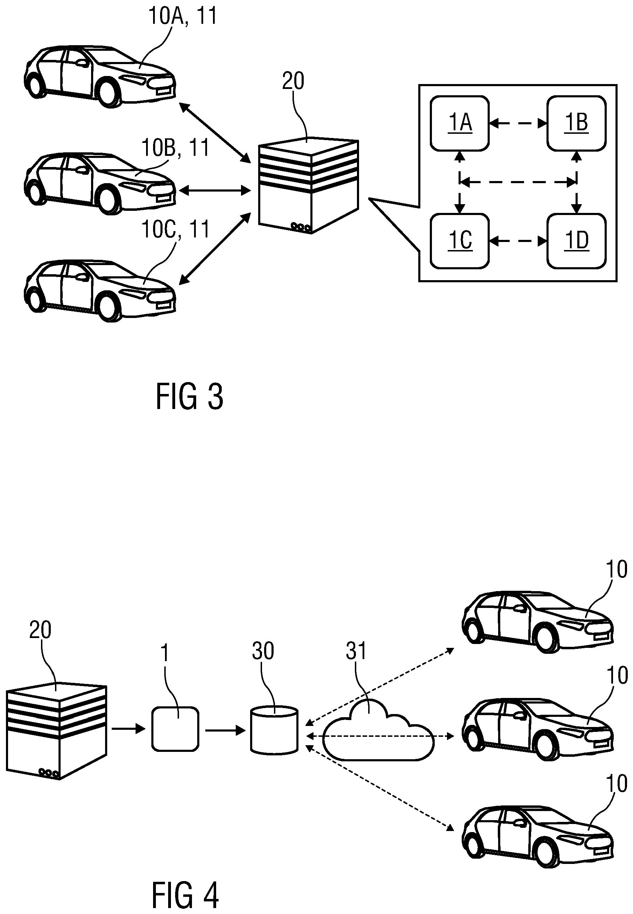

Der Erfindung liegt die Idee zu Grunde, dass über NFTs 1 parametrisierte Konfigurationen nicht auf eine beliebige Anzahl von Fahrzeugen 10 angewendet werden, sondern einzigartig (das heißt: auf einem einzigen Fahrzeug 10) oder limitiert (das heißt: auf höchstens einer vorbestimmten Anzahl von Fahrzeugen 10) anwendbar sind, und zwar unabhängig von der Anzahl der Fahrzeuge 10, die technisch zur Anwendung eines solchen NFTs 1 eingerichtet und vorbereitet wären. Für eine solche Begrenzung ist zunächst eine Individualisierung von NFTs 1 erforderlich, die anhand von Figur 3 genauer erläutert wird.

Figur 3 zeigt schematisch drei verschiedene Fahrzeuge 10A bis 10C mit jeweils mindestens einer Head Unit 11, die unabhängig voneinander auf das DLT - System 20 zugreifen. Das DLT - System 20 verwaltet vier NFTs 1A bis 1D, die in gleicher Weise eine bestimmte Konfiguration oder Parametrisierung für ein Fahrzeug 10 kodieren. Beispielsweise können über jeden der vier dargestellten NFTs 1A bis 1D gleiche Einstellungen für eine Fahrzeuginnenraumbeleuchtung festgelegt sein.

Ferner sind in diesen vier NFTs 1A bis 1D die technischen Voraussetzungen kodiert, die zur Umsetzung der darin festgelegten Konfiguration erforderlich sind, beispielsweise ein bestimmter Typ und ein mindestens ein Entwicklungsstand einer Fahrzeuginnenraumbeleuchtung als Hardwareversion und mindestens eine Softwareversion einer Head Unit 11. Es ist möglich, dass die in dem NFT 1A bis 1D kodierte Konfiguration mit Fahrzeugen 10A bis 10C unterschiedlichen Typs oder unterschiedlicher Entwicklungsstände umsetzbar ist.

Die dargestellten NFTs 1A bis 1D sind somit funktionsgleich, mit anderen Worten: jeder der vier NFTs 1A bis 1D führt, wenn er auf einem dafür durch seinen Typ und Entwicklungsstand geeignetes Fahrzeug 10A bis 10C eingerichtet wird, zu einer gleichen Nutzerwahrnehmung, beispielsweise zu einer gewissen, typischen Innenraumbeleuchtung. Selbstverständlich ist die durch einen NFT 1A bis 1D kodierte Konfiguration nicht auf eine visuelle Nutzerwahrnehmung beschränkt, es können ebenso Einstellungen eines Audiosystems oder Einstellungen an einem oder mehreren Fahrzeugsitzen oder Kombinationen derartiger Einstellungen kodiert sein. Die mit einem NFT 1A bis 1D assoziierbare Nutzerwahrnehmung ist nur durch die von der Head Unit 11 oder nachgeordneten Steuergeräten beeinflussbaren technischen Parameter an dem Fahrzeug 10A bis 10C beschränkt. Die funktionsgleichen NFTs 1A bis 1D weisen jedoch unterscheidbare Identitäten auf, die beispielsweise durch verschiedene zugeordnete Ganzzahlwerte oder Zeichenketten in der Art global eindeutiger Identifizierer (GUI - globally unique identifiers) bestimmt sein können.

Mittels des DLT - Systems 20 wird jeder der funktionsgleichen NFTs 1A bis 1D entweder individualisiert, das heißt: einem Fahrzeug 10A bis 10C zugeordnet, oder als noch verfügbar registriert. Beispielsweise kann ein erster NFT 1A einem ersten Fahrzeug 10A, ein zweiter NFT 1B einem zweiten Fahrzeug 10B und ein dritter NFT 1C einem dritten Fahrzeug 10C anhand der jeweiligen VIN zugeordnet sein und ein vierter NFT 1D als noch frei verfügbar registriert sein und weiteren Nutzern zum Erwerb angeboten werden.

Sowohl der Übergang eines bereits vergebenen NFTs 1A bis 1C (das heißt: die Zuordnung einer anderen VIN) als auch der Erwerb eines noch nicht vergebenen NFTs 1D (das heißt: die erstmalige Zuordnung einer neuen VIN) wird von dem DLT - System 20 registriert und verwaltet. Auf diese Weise kann eine beschränkte Auflage von funktionsgleichen NFTs 1A bis 1D, wie vorliegend beispielsweise im Umfang von vier funktionsgleichen NFTs 1A bis 1D, umgesetzt werden. Die Höhe (der Umfang) einer beschränkten Auflage kann durch den Betreiber des DLT - Systems 20, welcher die NFTs 1A bis 1D ausstellt, beliebig festgelegt werden und beispielsweise auch Eins sein.

In diesem Fall kann nur ein einziges NFT 1 einer gewissen Konfiguration (assoziiert mit einem gewissen Nutzererlebnis) einem Fahrzeug 10A bis 10C zugeordnet werden.

Zur Durchsetzung einer beschränkten Auflage einer gewissen Parametrisierung von Fahrzeugfunktionen ist neben der Individualisierung der dieser Parametrisierung zugeordneten NFTs 1A bis 1D eine Beschränkung des Zugriffs auf diese Parametrisierung erforderlich. Mit anderen Worten: es sollen nur diejenigen Fahrzeuge 1A bis 1C Einstellungen (beispielsweise zur farblichen Gestaltung der Beleuchtung des Fahrzeuginnenraums und/oder zur Beeinflussung der Audiowiedergabe) entsprechend dieser Parametrisierung vornehmen können, auf welche (anhand beispielsweise ihrer VINs) in dem DLT - System 20 eines dieser NFTs 1A bis 1D registriert ist. Figur 4 verdeutlicht die Funktionsweise einer derartigen Beschränkung.

Fahrzeuge 10, an denen bestimmte Einstellungen (beispielsweise an der Fahrzeuginnenraumbeleuchtung) vorgenommen werden sollen, erfragen an einem zentralen Konfigurations-Verwaltungssystem 30 eine Berechtigung hierfür ab, vorzugsweise unter Angabe der jeweiligen VIN. Die Fahrzeuge 10 sind mit dem Konfigurations-Verwaltungssystem 30 über ein drahtloses Over-The-Air (OTA) Netzwerk 31 verbunden.

Das Konfigurations-Verwaltungssystem 30 ermittelt, ob die angefragte Parametrisierung (das heißt: die Gesamtheit aller zur Erzeugung der spezifischen Nutzererfahrung erforderlichen Einstellungen) einem NFT 1 zugeordnet sind, das in dem DLT - System 20 für ein Fahrzeug 10 oder für mehrere Fahrzeuge 10A bis 10C registriert wurde. Falls eine solche Zuordnung nicht registriert ist, kann jedes beliebige Fahrzeug die angefragten Einstellungen vornehmen und verwenden.

Falls der angefragten Parametrisierung dagegen ein oder mehrere NFTs 1 zugeordnet ist beziehungsweise sind, überprüft das Konfigurations-Verwaltungssystem 30 die Übereinstimmung der Identität des anfragenden Fahrzeugs 10 mit der Identität des einen Inhabers oder mit den Identitäten der mehreren Inhaber der NFTs 1, die für die angefragten Einstellungen ausgestellt wurden. Beispielsweise kann überprüft werden, ob eines der in Frage kommenden NFTs 1 auf die VIN des anfragenden Fahrzeugs 10 ausgestellt wurde.

Wird eine Übereinstimmung festgestellt, so werden die Parameter und/oder der Algorithmus für die angefragte Parametrisierung an die in Figur 4 nicht näher dargestellte Head Unit 11 des anfragenden Fahrzeugs 10 übermittelt, welche daraus die konkreten, zur Einstellung der Fahrzeugfunktionen erforderlichen Anweisungen und Parameter ermittelt und in dem Fahrzeug 10 umsetzt.

Wurde keiner der für die angefragte Parametrisierung erstellten NFTs 1 auf das anfragende Fahrzeugs 10 ausgestellt, so wird die Übermittlung der Parameter beziehungsweise des Algorithmus verweigert. In diesem Fall kann das anfragende Fahrzeug 10 die Parametrisierung nicht vornehmen. Damit ist sichergestellt, dass eine Parametrisierung exklusiv denjenigen Fahrzeugen 10 vorbehalten bleibt, denen ein entsprechendes NFT 1 zugeteilt wurde.

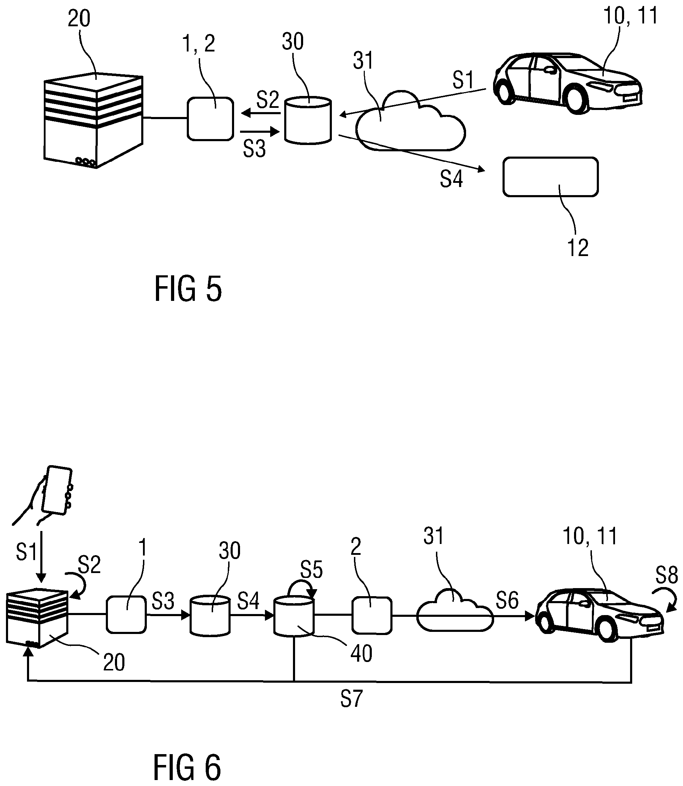

Wie bereits ausgeführt, kann die technische Umsetzbarkeit der in einem NFT 1 kodierten Fahrzeugeinstellungen an technische Voraussetzungen gebunden sein, die nicht in jedem Fahrzeug 10 eines Fahrzeugtyps gegeben sind, beispielsweise an eine bestimmte Hardwarekonfiguration und/oder einen Versionsstand einer Firmware für ein Innenraumbeleuchtungssystem oder für ein Audiosystem. Nachfolgend wird anhand von Figur 5 genauer erläutert, wie ein NFT 1 ausgewählt wird, das für ein bestimmtes Fahrzeug 10 geeignet ist (das heißt: dessen kodierte Einstellungen auf dem Fahrzeug 10 umsetzbar sind).

Ein Fahrzeug 10 (umfassend eine in Figur 5 nicht näher dargestellte Head Unit 11) teilt in einem ersten Schritt S1 seine VIN über ein OTA Netzwerk 31 an ein Konfigurations-Verwaltungssystem 30 mit, in dem die Ausstattungsmerkmale des Fahrzeugs 10 erfasst sind. In einem zweiten Schritt S2 ermittelt das Konfigurations-Verwaltungssystem 30 die Gesamtheit von Ausstattungsmerkmalen (beispielsweise Hardware- und Softwarekonfigurationen eines Innenraumbeleuchtungssystems und/oder einer Audioanlage), die der mitgeteilten VIN zugeordnet sind.

In einem dritten Schritt S3 ermittelt das Konfigurations-Verwaltungssystem 30 durch Abfrage von dem DLT - System 20 diejenigen dort registrierten NFTs 1, die mit den Ausstattungsmerkmalen des Fahrzeugs 10 kompatibel sind. Alternativ oder zusätzlich ist es auch möglich, die den ausgewählten NFTs 1 jeweils zugeordneten NFT-Hashwerte 2 an das Fahrzeug 10 zu übertragen. Diese Ausführungsform wird nachfolgend anhand von Figur 6 noch genauer erläutert werden.

In einem vierten Schritt S4 wird diese fahrzeugspezifische Auswahl von NFTs 1 über das OTA Netzwerk 31 an das Fahrzeug 10 übermittelt und dort auf einem Display 12 (das beispielsweise der Head Unit 11 zugeordnet sein kann) dargestellt.

Für die Darstellung auf dem Display 12 ist es erforderlich, die wesentlichen Merkmale jedes NFTs 1 dieser fahrzeugspezifischen Auswahl zu ermitteln. Dies kann durch Dekodieren des jeweiligen NFTs 1 oder anhand des zugeordneten NFT-Hashwertes 2 erfolgen.

Figur 6 erläutert eine Ausführungsform eines Verfahrens, bei dem in einem Fahrzeug 10 eine Auswahl geeigneter NFTs 1 anhand von deren NFT-Hashwerten 2 getroffen wird, genauer.

In einem ersten Schritt S1 werden Einstellungen von Fahrzeugfunktionen, bevorzugt Einstellungen bezüglich des Fahrzeuginnenraums, entwickelt, die beispielsweise ein besonders angenehmes oder originelles Nutzererlebnis vermitteln. Diese Einstellungen können vom Hersteller des Fahrzeugs 10, aber auch von einem Dienstleister, einem Zulieferer oder einem an der Herstellung des Fahrzeugs 10 unbeteiligten Dritten entwickelt werden.

In einem zweiten Schritt S2 wird aus den entwickelten Fahrzeugeinstellungen (das heißt: den Parametern oder der Konfiguration von Fahrzeugfunktionen) auf einem DLT - System 20 ein NFT 1 oder eine vorbestimmte, limitierte Anzahl von NFTs 1 über einen kryptographischen Prozess geprägt.

In einem dritten Schritt S3 wird das mindestens eine NFT 1, das den entwickelten Fahrzeugeinstellungen zugeordnet wurde, an das Konfigurations-Verwaltungssystem 30 übermittelt, auf dem die Ausstattungsmerkmale der Fahrzeuge 10 einer Flotte und/oder eines Herstellers anhand ihrer jeweiligen VINs registriert sind.

In einem vierten Schritt S4 ermittelt das Konfigurations-Verwaltungssystem 30 die VINs derjenigen Fahrzeuge 10, deren Ausstattungsmerkmale mit den entwickelten Fahrzeugeinstellungen (die dem mindestens einen NFT 1 bei dessen beziehungsweise deren Prägung zugeordnet wurden) kompatibel sind. Wenn mindestens ein kompatibles Fahrzeug 10 ermittelt wird, wird das mindestens eine NFT 1 an einen NFT-Hashwert - Konvertierer 40 übertragen.

Der NFT-Hashwert - Konvertierter 40 ordnet in einem fünften Schritt S5 jedem NFT 1 einen NFT-Hashwert 2 derart zu, dass in dem NFT-Hashwert 2 eine Zeichenkette enthalten ist, die die Funktion oder das ausgelöste Nutzererlebnis des jeweiligen NFTs 1 beschreibt. Beispielsweise könnte für ein NFT 1 mit einer besonderen Einstellung des Fahrzeuglichts ein NFT-Hashwert 2 als Zeichenkette "XXXXLIGHTINGXXX284UR" generiert werden.

In einem sechsten Schritt S6 wird der generierte NFT-Hashwert 2 über ein OTA Netzwerk 31 an ein Fahrzeug 10 gesendet, dessen Ausstattungsmerkmale kompatibel zu den Einstellungen des zugeordneten NFTs 1 sind. In dem Fahrzeug 10 kann der NFT-Hashwert 2 einer Auswahlliste (Whitelist) hinzugefügt werden, die alle auf dem DLT - System 20 für dieses Fahrzeug 10 verfügbaren, über NFTs 1 geschützten Einstellungen umfasst.

In einer Ausführungsform kann an Stelle des vollständigen NFT-Hashwertes 2 nur ein Teil davon lokal in dem Fahrzeug 10 gespeichert werden, mit welchem die Funktion und optional weitere Parameter, beispielsweise die erforderlichen Ausstattungsmerkmale oder die Höhe einer limitierten Auflage beschrieben werden.

Aus einer solchen Auswahlliste kann ein Nutzer für ihn interessante Einstellungen auswählen und einen zugeordneten NFT 1 bei dem DLT - System 20 erwerben. Beim Erwerb eines NFTs 1 wird die VIN des Fahrzeugs 10 in einem siebten Schritt S7 in dem DLT - System 20 zugeordnet. Damit wird die mit dem NFT 1 assoziierte Konfiguration (beispielsweise die Einstellung der Fahrzeuginnenraumbeleuchtung) diesem individuellen Fahrzeug 10 zugeordnet.

Anschließend kann der Nutzer in einem achten Schritt S8 die Einstellungen dieses NFTs 1 aktivieren. Wie anhand von Figur 4 bereits erläutert wurde, wird bei einer Aktivierung überprüft, ob die Identität (das heißt: die VIN) des Fahrzeugs 10 mit derjenigen des Fahrzeugs 10 oder eines der Fahrzeuge 10 übereinstimmt, auf das beziehungsweise auf die in dem DLT - System 20 ein entsprechender NFT 1 registriert wurde.

In einer alternativen oder zusätzlichen Ausführungsform kann an Stelle einer Auswahlliste (Whitelist) eine Negativliste (Blacklist) derjenigen NFTs 1 erstellt und auf dem Fahrzeug 10 abgelegt werden, für die dieses Fahrzeug 10 nicht kompatibel ist (das heißt: nicht die erforderlichen Ausstattungsmerkmale aufweist).

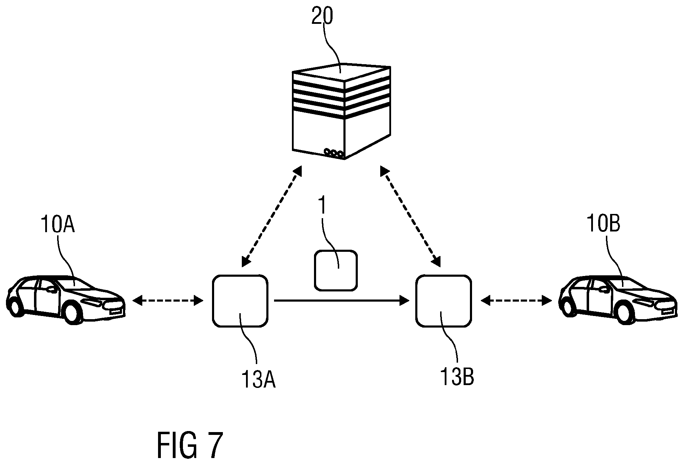

Figur 7 zeigt schematisch den Ablauf einer Transaktion, bei der ein NFT 1 von einem ersten Fahrzeug 10A auf ein zweites Fahrzeug 10B übertragen wird. Jedem der Fahrzeuge 10A, 10B ist jeweils ein Nutzerkonto 13A, 13B bei dem DLT - System 20 zugeordnet.

Vor Ausführung der Transaktion ist ein NFT 1 in dem DLT - System 20 für das erste Fahrzeug 10A registriert. Somit können die diesem NFT 1 zugeordneten Einstellungen an dem ersten Fahrzeug 10A aktiviert und vorgenommen werden.

Zur Vereinfachung wird zunächst der Fall dargestellt, dass lediglich ein einziger und somit exklusiver NFT 1 für die zugeordneten Einstellungen geprägt wurde. In diesem Fall ist jedem anderen und somit auch dem zweiten Fahrzeug 10B die Verwendung dieser Einstellungen nicht möglich.

Bei der Transaktion wird, gegen Zahlung eines vereinbarten Kaufpreises, der NFT 1 auf das zweite Fahrzeug 10B übertragen. Die Transaktion (das heißt: die Neuzuordnung einer Fahrzeugidentität, typischerweise einer VIN, zu dem NFT 1) wird in dem DLT - System 20 registriert. Nach der Transaktion werden die zugeordneten Einstellungen am ersten Fahrzeug 10A deaktiviert und können am zweiten Fahrzeug 10B aktiviert werden.

Die Nutzerkonten 13A, 13B dienen der Zuordnung von einem oder mehreren Fahrzeugen 10, 10A bis 10C zu einem Nutzer, das heißt: zu einer natürlichen oder juristischen Person mit Eigentumsrechten an dem jeweiligen Fahrzeug 10, 10A bis 10C. Ferner können über die Nutzerkonten 13A, 13B geschäftliche Transaktionen wie der beschriebene Verkauf und Kauf von NFTs 1 abgewickelt werden. Der Betreiber eines NFT-Marktplatzes, über den diese Transaktionen abgewickelt werden und zu dem die Nutzerkonten 13A, 13B Zugang verschaffen, kann Gebühren für die Transaktionen mit oder für die Verwaltung von NFTs 1 erheben. Bevorzugt wird ein solcher NFT-Marktplatz für Smartphones oder Webbrowser von Rechnerarbeitsplätzen aus zugänglich sein.

Auch für den Fall, dass nicht nur ein einziges (exklusives) NFT 1, sondern eine begrenzte Anzahl von NFTs 1 bezogen auf gewisse Fahrzeugeinstellungen wie ein Farbschema für die Fahrzeuginnenraumbeleuchtung geprägt wurden, kann eine derartige Verkaufstransaktion ausgeführt werden. Ein Käufer kann in diesem Fall unter potentiell mehreren Anbietern von zwar hinsichtlich der Fahrzeugeinstellungen gleichen, jedoch individuell unterscheidbaren und potenziell auch mit zu verschiedenen Konditionen angebotenen NFTs 1 auswählen.

Es ist auch möglich, dass NFTs 1 von juristischen oder natürlichen Personen mit einem Nutzerkonto 13A, 13B erworben werden, ohne dass zugleich eine Zuordnung zu einem Fahrzeug 10, 10A bis 10C erfolgt. Beispielsweise kann ein Fahrzeughersteller NFTs 1 erwerben oder zurückerwerben, um sie erneut anzubieten.

## Patentansprüche

1. Verfahren zur individuellen Zuweisung mindestens eines Fahrzeugfunktionsschemas, beschreibend die Konfiguration mindestens einer Fahrzeugfunktion, zu mindestens einem Fahrzeug (10, 10A bis 10C), das Verfahren umfassend:
- ein Fahrzeugfunktionsschema digital erfasst und als nicht-fungibles Token (NFT) (1, 1A bis 1D) in einer vorbestimmten Anzahl in einem Distributed Ledger Technology (DLT) - System (20) geprägt wird, welches zur Zuordnung von jeweils höchstens einem Fahrzeug (10, 10A bis 10C) zu einem NFT (1, 1A bis 1D) eingerichtet ist,
- für ein Fahrzeug (10, 10A bis 10C) mindestens ein NFT (1, 1A bis 1D) ausgewählt und/oder erworben wird und
- das jeweils zugeordnete Fahrzeugfunktionsschema auf das Fahrzeug (10, 10A bis 10C) angewendet wird,
- wobei ein NFT (1, 1A bis 1D) die technischen Voraussetzungen kodiert, die zur Umsetzung einer durch das zugeordnete Fahrzeugfunktionsschema beschriebenen Konfiguration der mindestens einen Fahrzeugfunktion erforderlich sind und
- wobei ein NFT (1, 1A bis 1D) Anforderungsdaten (1.1) und Parameterdaten (1.2) umfasst, wobei die Parameterdaten (1.2) die Einstellungen des Fahrzeugfunktionsschemas beschreiben und wobei die Anforderungsdaten (1.1) die für eine Umsetzung des Fahrzeugfunktionsschemas gemäß der Parameterdaten (1.2) erforderlichen Ausstattungsmerkmale des Fahrzeugs (10, 10A bis 10C) beschreiben.

2. Verfahren nach Anspruch 1,
**dadurch gekennzeichnet, dass**
die Anforderungsdaten (1.1) einen Sonderausstattungs-Code (SA Code) und/oder eine Hardware-Version und/oder eine Software-Version eines Ausstattungsmerkmals umfassen.

3. Verfahren nach einem der vorhergehenden Ansprüche,
**dadurch gekennzeichnet, dass**
das Fahrzeugfunktionsschema Parameter einer visuell wahrnehmbaren Inszenierung des Fahrzeuginnenraums des Fahrzeugs (10, 10A bis 10C) erfasst.

4. Verfahren nach einem der vorhergehenden Ansprüche,
**dadurch gekennzeichnet, dass**
das Fahrzeugfunktionsschema Parameter einer Audio- und/oder Soundwiedergabe im Innenraum oder in der Umgebung des Fahrzeugs (10, 10A bis 10C) erfasst.

5. Verfahren nach einem der vorhergehenden Ansprüche,
**dadurch gekennzeichnet, dass**
für mindestens einen in dem DLT - System (20) registrierten NFT (1, 1A bis 1D) dessen Kompatibilität zu einem Fahrzeug (10, 10A bis 10C) anhand der Identität des Fahrzeugs (10, 10A bis 10C) ermittelt wird.

6. Verfahren nach einem der vorhergehenden Ansprüche,
**dadurch gekennzeichnet, dass**
für ein Fahrzeug (10, 10A bis 10C) eine Auswahlliste von zu diesem Fahrzeug (10, 10A bis 10C) kompatiblen NFTs (1, 1A bis 1D) ermittelt und zur Auswahl mindestens eines NFTs (1, 1A bis 1D) angeboten wird.

7. Verfahren nach Anspruch 5 oder 6,
**dadurch gekennzeichnet, dass**
die Auswahlliste von zu einem Fahrzeug (10, 10A bis 10C) kompatiblen NFTs (1, 1A bis 1D) in mindestens einer Head Unit (11) dieses Fahrzeugs (10, 10A bis 10C) gespeichert wird.

8. Verfahren nach einem der Ansprüche 5 bis 7,
**dadurch gekennzeichnet, dass**
- in einem Konfigurations-Verwaltungssystem (30) einem Fahrzeug (10, 10A bis 10C) Ausstattungsmerkmale zugeordnet werden und die Zuordnung gespeichert wird,
- eine Liste aller in dem DLT - System (20) geprägten NFTs (1, 1A bis 1D) erstellt wird,
- mindestens ein NFT (1, 1A bis 1D) von der Liste ausgewählt wird und
- für das mindestens eine ausgewählte NFT (1, 1A bis 1D) die Kompatibilität zu dem Fahrzeug (10, 10A bis 10C) anhand des Konfigurations-Verwaltungssystems (30) bestimmt wird.

9. Verfahren nach Anspruch 8,
**dadurch gekennzeichnet, dass**
jedem NFT (1, 1A bis 1D) ein erster Hashwert basierend auf Anforderungsdaten (1.1) und ein zweiter Hashwert basierend auf Parameterdaten (1.2) zugeordnet wird und eine erste Liste umfassend die ersten Hashwerte erstellt und lokal in einem Fahrzeug gespeichert wird sowie eine zweite Liste umfassend die zweiten Hashwerte erstellt und verteilt in einer Cloud gespeichert wird, wobei die Parameterdaten (1.2) die Einstellungen des Fahrzeugfunktionsschemas beschreiben und wobei die Anforderungsdaten (1.1) die für eine Umsetzung des Fahrzeugfunktionsschemas gemäß der Parameterdaten (1.2) erforderlichen Ausstattungsmerkmale des Fahrzeugs (10, 10A bis 10C) beschreiben.

10. Vorrichtung zur Durchführung eines Verfahrens nach einem der vorhergehenden Ansprüche, wobei die Vorrichtung mindestens ein DLT - System (20) umfasst, das für den Zugriff über ein Over-The-Air (OTA) Netzwerk (31) eingerichtet ist.

## Claims

1. Method for individually allocating at least one vehicle function schema, describing the configuration of at least one vehicle function, to at least one vehicle (10, 10A to 10C), the method comprising:
- a vehicle function schema is digitally recorded and minted as a non-fungible token (NFT) (1, 1A to 1D) in a predetermined number in a distributed ledger technology (DLT) system (20), which is configured to assign a maximum of one vehicle (10, 10A to 10C) to an NFT (1, 1A to 1D),
- at least one NFT (1, 1A to 1D) is selected and/or acquired for a vehicle (10, 10A to 10C) and
- the relevant assigned vehicle function schema is applied to the vehicle (10, 10A to 10C),
- wherein an NFT (1, 1A to 1D) encodes the technical requirements required to implement a configuration of the at least one vehicle function, which configuration is described by the assigned vehicle function schema and
- wherein an NFT (1, 1A to 1D) comprises requirement data (1.1) and parameter data (1.2), wherein the parameter data (1.2) describe the settings of the vehicle function schema and wherein the requirement data (1.1) describe the equipment features of the vehicle (10, 10A to 10C) required for implementing the vehicle function schema according to the parameter data (1.2).

2. Method according to claim 1,
**characterized in that**
the requirement data (1.1) include a special equipment code (SA code) and/or a hardware version and/or a software version of an equipment feature.

3. Method according to either of the preceding claims,
**characterized in that**
the vehicle function schema records parameters of a visually perceptible representation of the vehicle interior of the vehicle (10, 10A to 10C).

4. Method according to any of the preceding claims,
**characterized in that**
the vehicle function schema records parameters of an audio and/or sound playback in the interior or in the surroundings of the vehicle (10, 10A to 10C).

5. Method according to any of the preceding claims,
**characterized in that**
for at least one NFT (1, 1A to 1D) registered in the DLT system (20), the compatibility of which with a vehicle (10, 10A to 10C) is determined on the basis of the identity of the vehicle (10, 10A to 10C).

6. Method according to any of the preceding claims,
**characterized in that**
for a vehicle (10, 10A to 10C), a selection list of NFTs (1, 1A to 1D) compatible with this vehicle (10, 10A to 10C) is determined and at least one NFT (1, 1A to 1D) is offered for selection.

7. Method according to either claim 5 or claim 6,
**characterized in that**
the selection list of NFTs (1, 1A to 1D) compatible with a vehicle (10, 10A to 10C) is stored in at least one head unit (11) of this vehicle (10, 10A to 10C).

8. Method according to any of claims 5 to 7,
**characterized in that**
- in a configuration management system (30), equipment features are assigned to a vehicle (10, 10A to 10C) and the assignment is stored,
- a list of all NFTs (1, 1A to 1D) minted in the DLT system (20) is created,
- at least one NFT (1, 1A to 1D) is selected from the list and
- for the at least one selected NFT (1, 1A to 1D) the compatibility with the vehicle (10, 10A to 10C) is determined using the configuration management system (30).

9. Method according to claim 8,
**characterized in that**
each NFT (1, 1A to 1D) is assigned a first hash value on the basis of requirement data (1.1) and a second hash value on the basis of parameter data (1.2) and a first list comprising the first hash values is created and stored locally in a vehicle, and a second list comprising the second hash values is created and stored in a cloud in a distributed manner, the parameter data (1.2) describing the settings of the vehicle function schema and the requirement data (1.1) describing the equipment features of the vehicle (10, 10A to 10C) required for implementing the vehicle function schema according to the parameter data (1.2).

10. Device for carrying out a method according to any of the preceding claims, wherein the device comprises at least one DLT system (20) which is configured for access via an over-the-air (OTA) network (31).

## Revendications

1. Procédé d'attribution individuelle d'au moins un schéma de fonction de véhicule, décrivant la configuration d'au moins une fonction de véhicule, à au moins un véhicule (10, 10A à 10C), le procédé comprenant :
- un schéma de fonction de véhicule est saisi numériquement et est frappé sous la forme d'un jeton non fongible (NFT) (1, 1A à 1D) en un nombre prédéterminé dans un système (20) de technologie de registre distribué (DLT), qui est conçu pour l'association respectivement d'au plus un véhicule (10, 10A à 10C) à un **NFT** (1, 1A à 1D),
- pour un véhicule (10, 10A à 10C), au moins un **NFT** (1, 1A à 1D) est sélectionné et/ou acquis, et
- le schéma de fonction de véhicule respectivement associé est appliqué au véhicule (10, 10A à 10C),
- dans lequel un NFT (1, 1A à 1D) code les conditions techniques requises pour mettre en œuvre une configuration de l'au moins une fonction de véhicule décrite par le schéma de fonction de véhicule associé, et
- dans lequel un NFT (1, 1A à 1D) comprend des données de demande (1.1) et des données de paramètre (1.2), dans lequel les données de paramètre (1.2) décrivent les réglages du schéma de fonction de véhicule et dans lequel les données de demande (1.1) décrivent les caractéristiques d'équipement du véhicule (10, 10A à 10C) nécessaires pour une mise en œuvre du schéma de fonction de véhicule selon les données de paramètre (1.2).

2. Procédé selon la revendication 1,
**caractérisé en ce que**
les données de demande (1.1) comprennent un code d'équipement spécial (SA Code) et/ou une version de matériel et/ou une version de logiciel d'une caractéristique d'équipement.

3. Procédé selon l'une des revendications précédentes,
**caractérisé en ce que**
le schéma de fonction de véhicule détecte des paramètres d'une mise en scène visuellement perceptible de l'habitacle du véhicule (10, 10A à 10C).

4. Procédé selon l'une des revendications précédentes,
**caractérisé en ce que**
le schéma de fonction de véhicule détecte des paramètres d'une reproduction audio et/ou sonore dans l'habitacle ou dans l'environnement du véhicule (10, 10A à 10C).

5. Procédé selon l'une des revendications précédentes,
**caractérisé en ce que**
pour au moins un NFT (1, 1A à 1D) enregistré dans le système DLT (20), sa compatibilité avec un véhicule (10, 10A à 10C) est déterminée à l'aide de l'identité du véhicule (10, 10A à 10C).

6. Procédé selon l'une des revendications précédentes,
**caractérisé en ce que**
pour un véhicule (10, 10A à 10C), une liste de sélection de NFT (1, 1A à 1D) compatibles avec ce véhicule (10, 10A à 10C) est déterminée et proposée pour la sélection d'au moins un NFT (1, 1A à 1D).

7. Procédé selon la revendication 5 ou 6,
**caractérisé en ce que**
la liste de sélection de NFT (1, 1A à 1D) compatibles avec un véhicule (10, 10A à 10C) est mémorisée dans au moins une unité principale (11) dudit véhicule (10, 10A à 10C).

8. Procédé selon l'une des revendications 5 à 7,
**caractérisé en ce que**
- dans un système de gestion de configuration (30), des caractéristiques d'équipement sont associées à un véhicule (10, 10A à 10C) et l'association est mémorisée,
- une liste de tous les NFT (1, 1A à 1D) frappés dans le système DLT (20) est générée,
- au moins un NFT (1, 1A à 1D) est sélectionné dans la liste, et
- pour l'au moins un NFT (1, 1A à 1D) sélectionné, la compatibilité avec le véhicule (10, 10A à 10C) est déterminée à l'aide du système de gestion de configuration (30).

9. Procédé selon la revendication 8,
**caractérisé en ce que**
à chaque NFT (1, 1A à 1D) est associée une première valeur de hachage basée sur des données de demande (1.1) et une seconde valeur de hachage basée sur des données de paramètres (1.2) et une première liste comprenant les premières valeurs de hachage est générée et mémorisée localement dans un véhicule et une seconde liste comprenant les secondes valeurs de hachage est générée et mémorisée de manière répartie dans un nuage, dans lequel les données de paramètres (1.2) décrivent les réglages du schéma de fonction de véhicule et dans lequel les données de demande (1.1) décrivent les caractéristiques d'équipement du véhicule (10, 10A à 10C) nécessaires pour une mise en œuvre du schéma fonctionnel du véhicule selon les données de paramètre (1.2).

10. Dispositif pour la réalisation d'un procédé selon l'une des revendications précédentes, dans lequel le dispositif comprend au moins un système DLT (20) conçu pour l'accès par l'intermédiaire d'un réseau en liaison directe (OTA) (31).
